# FASCICULE DE BREVET EUROPEEN

(11) **EP 1 542 252 B1**
(45) Date de publication et mention de la délivrance du brevet: **22.03.2006**
(21) Numéro de dépôt: 03360143.6
(22) Date de dépôt: 12.12.2003
(51) Int. Cl.: H01H 25/06

(54) **Dispositif de commande pour véhicule**
Bedienvorrichtung für Kraftfahrzeug
Operating device for motor vehicle

(43) Date de publication de la demande: 15.06.2005
(73) Titulaire: Delphi Technologies Inc., Troy, Michigan 48007 (US)
(72) Inventeur: Ritondo, Cedric, 67200 Strasbourg (FR); Zann, Oliver, 67280 Urmatt (FR); Bidard, Dominique, 67120 Kolbsheim (FR)
(74) Mandataire: Merckling, Norbert

(56) Documents cités:
- EP-A- 1 094 483
- FR-A- 2 823 472

## Description

La présente invention se rapporte au domaine technique des dispositifs de commande associés notamment à des véhicules automobiles.

La présente invention concerne plus particulièrement des dispositifs de commande sous volant pour un véhicule ainsi que des colonnes de direction munies d'un tel dispositif.

Il est souvent envisagé d'optimiser le positionnement des dispositifs de commande dans un véhicule afin d'en faciliter l'accès d'une part et d'éviter à l'utilisateur d'avoir à lâcher le volant ou à détourner ses yeux de la route d'autre part.

Il est connu de réaliser un dispositif de commande pour activer/désactiver des fonctions, notamment d'un véhicule automobile, comportant :
- un boîtier dans lequel est rapportée une surface de contact, établissant des contacts électriques,
- un organe de commande sélectionnant et validant une fonction avec l'actionnement de contacts électriques, l'organe de commande étant monté rotatif sur un axe de rotation et pivotant autour d'un axe de pivotement, distinct de l'axe de rotation, la rotation et le pivotement de l'organe de commande permettant respectivement de sélectionner une fonction et de valider la fonction sélectionnée. Le document FR 2 823 472 montre un dispositif selon le préambule de la revendication 1.

On connaît par exemple par l'intermédiaire du document EP -1 251 536, un organe de commande monté rotatif selon un premier axe de rotation et pivotant selon un axe de pivotement orthogonal à l'axe de rotation. Les deux axes sont coplanaires et l'axe de pivotement est matérialisé par une rotule montée dans un logement complémentaire solidaire du boîtier et agencé sous une platine support comportant un circuit électrique.

Le dispositif présente également un organe de commande traversant la platine support. Un tel dispositif nécessite l'utilisation d'un nombre de pièces important et un montage relativement complexe dans la mesure où une partie des pièces traverse la platine support. Ceci génère souvent des coûts élevés. En outre, l'utilisation d'une démultiplication par un système de renvoi par engrenage présente inévitablement des jeux de fonctionnement et de montage, et contribue à la complexité du processus de montage.

Le but de la présente invention vise à réaliser un dispositif de commande comportant un nombre de pièces réduit et une grande simplicité dans l'assemblage dudit dispositif.

Un autre but vise à réduire les coûts de fabrication de tels dispositifs.

Selon l'invention, l'organe de commande est associé à un levier d'actionnement dont l'une des extrémités comporte l'axe de rotation et dont l'autre extrémité est montée pivotante autour de l'axe de pivotement, le levier étant déplaçable entre une position de repos et au moins une position active dans laquelle au moins un contact électrique sur la surface de contact est actionné à des fins de validation d'une fonction, l'axe de rotation et l'axe de pivotement s'étendant dans des plans d'extensions distincts.

Il est ainsi possible de disposer l'axe de pivotement dans le boîtier de manière à réaliser un circuit électrique dépourvu de passages pour une partie de l'organe de commande.

Le dispositif de commande présente également un organe de commande, un levier d'actionnement et des moyens pour établir des liaisons et des commutations électriques, agencés sur et au voisinage de la même face d'une platine support sur laquelle est rapporté le circuit électrique.

Selon un exemple de réalisation, l'organe de commande comporte une molette montée rotative sur l'extrémité libre du levier d'actionnement et associée à une liaison électrique tournante sur la surface de contact. La molette permet par exemple de sélectionner une fonction ou une commande.

Selon un exemple de réalisation, la molette présente une surface d'indexage, associée à un doigt d'indexage sollicité par un ressort et monté sur le levier sensiblement parallèlement à l'axe de rotation, exerçant ainsi un appui élastique sur la surface d'indexage. Les différentes fonctions de commandes accessibles sont ainsi mieux différentiables l'une de l'autre.

Selon un exemple de réalisation, il comporte des moyens de verrouillage, immobilisant en rotation la molette lors du déplacement du levier dans au moins une position active. On peut ainsi se prémunir d'une mauvaise manipulation, consistant à tourner la molette tout en procédant à un pivotement du levier pour valider une fonction, et validant par conséquent une autre fonction que celle souhaitée.

Selon un exemple de réalisation, la liaison électrique tournante est obtenue avec des lames conductrices flexibles solidaires de la molette et en contact avec des pistes conductrices solidaires de la surface de contact. On obtient ainsi un rattrapage de jeu des pièces mécaniques en mouvement, et ce avec un nombre de pièces réduit et un encombrement réduit.

Selon un exemple de réalisation, le levier est pourvu, entre la molette et l'axe de pivotement d'un organe d'appui venant actionner l'organe de commande électrique. On peut ainsi éliminer les jeux mécaniques et garantir un effort donné sur le moyen de commutation lors de son actionnement. La position de l'organe de commutation électrique peut ainsi être la position choisie en différents endroits de la surface de contact, en tenant compte de la configuration ou des dimensions des surfaces de contact du circuit électrique.

Selon un exemple de réalisation, il comporte un moyen élastique de rappel sollicitant le levier d'actionnement en cas de pivotement dans au moins une position active pour le ramener dans sa position de repos.

Selon un exemple de réalisation, les plans d'extension respectifs de l'axe de pivotement et de l'axe de rotation sont parallèles.

Selon un exemple de réalisation, les plans d'extension respectifs de l'axe de pivotement et de l'axe de rotation sont sécants

La présente invention concerne également une commande au volant comportant un dispositif tel que décrit ci-dessus.

D'autres caractéristiques et avantages ressortiront également de la description détaillée figurant ci-après donnée à titre d'exemple en référence aux dessins annexés, dans lesquels :
la figure 1 est une vue en éclaté d'un exemple de réalisation du dispositif de commande conforme à l'invention,
la figure 2 est une vue en perspective d'un exemple de réalisation du dispositif de commande conforme à l'invention une fois assemblé,
les figures 3 et 4 schématisent un exemple de réalisation du dispositif de commande conforme à l'invention, dans des états de fonctionnement différents.

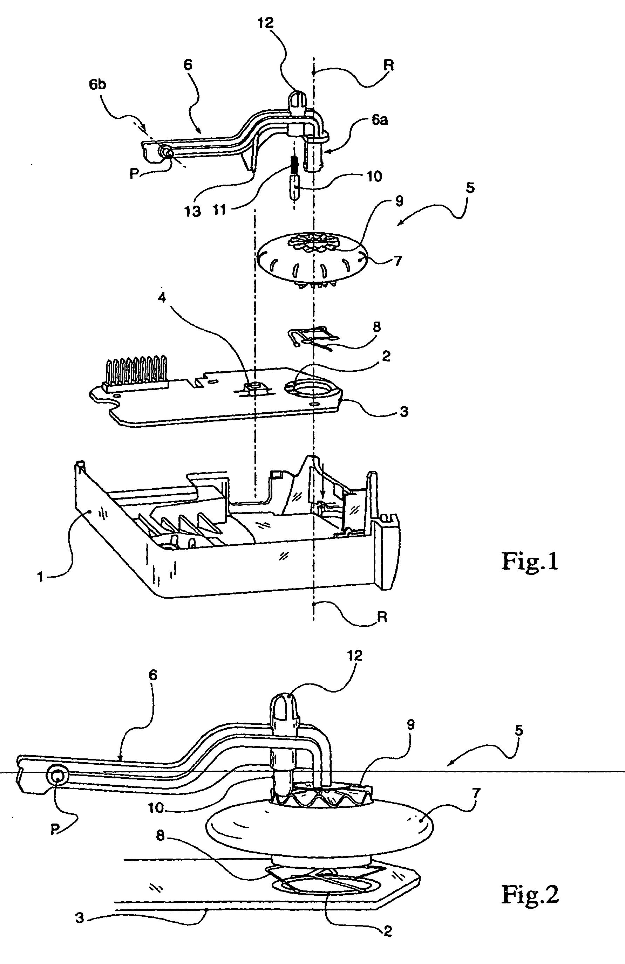

Le dispositif de commande représenté par exemple à la figure 1 permet de sélectionner, désactiver ou d'activer des fonctions d'un véhicule. Le dispositif de commande comporte un boîtier 1 dans lequel est rapportée une surface de contact 2 établissant des contacts électriques. Cette surface de contact 2 est par exemple rapportée sur une platine support 3 laquelle permet également de réaliser le circuit électrique ou électronique associé au dispositif de commande.

Un moyen de communication 4 est également prévu sur la platine support 3. Le dispositif de commande comporte également un organe de commande 5 sélectionnant et validant une fonction avec actionnement de contacts électriques réalisés notamment avec le moyen de commutation 4. Ce dernier est par exemple réalisé avec un « microswitch » ou un dôme métallique.

L'organe de commande 5 est de préférence monté rotatif sur un axe de rotation R et pivotant autour d'un axe de pivotement P distinct de l'axe de rotation R. La rotation et le pivotement de l'organe de commande 5 permet respectivement de sélectionner une fonction et de valider la fonction sélectionnée.

L'organe de commande 5 est associé à un levier d'actionnement 6 dont l'une des extrémités 6a correspondant à l'extrémité libre, comporte l'axe de rotation R et dont l'autre extrémité 6b est montée pivotante autour de l'axe de pivotement P. Le levier d'actionnement 6 est déplaçable entre une position de repos et au moins une position active dans laquelle au moins un moyen de commutation électrique 4 de la platine support 3 est actionné à des fins de validation d'une fonction.

Conformément à l'invention, l'axe de rotation R et l'axe de pivotement P s'étendent dans des plans d'extension distincts.

L'organe de commande 5 comporte par exemple une molette rotative 7 montée sur l'extrémité libre 6a du levier d'actionnement 6. La molette 7 est associée à un moyen établissant une liaison électrique rotative sur la surface de contact 2.

La liaison électrique rotative est par exemple obtenue avec des lames conductrices flexibles 8 solidaires de la molette 7 et en contact avec des pistes conductrices réalisant la surface de contact 2. Les lames flexibles conductrices 8 sont conformées de manière à rester solidaires de la molette 7 et d'établir un contact avec la surface de contact 2. La flexibilité desdites lames conductrices flexibles 8 permet de rattraper le jeu mécanique existant entre les différentes pièces en mouvement et notamment entre la molette 7 et le levier d'actionnement 6. Les lames flexibles 8 permettent également un retour élastique de la molette 7 dans sa position de repos.

La liaison électrique entre les lames flexibles conductrices 8 et les pistes conductrices sont donc conservées malgré une apparition inévitable d'un jeu mécanique après l'assemblage desdites pièces constitutives du dispositif de commande.

La molette 7 présente également une surface d'indexage 9 associée à un doigt d'indexage 10 sollicité par un ressort 11. Le doigt d'indexage 10 est monté sur le levier d'actionnement 6 sensiblement parallèlement à l'axe de rotation R et exerce ainsi un appui élastique sur la surface d'indexage 9.

Le levier d'actionnement 6 comporte également un logement 12 destiné à recevoir un ressort 11 ainsi que le doigt d'indexage 10 mobile par translation dans ledit logement 12.

Dans l'exemple de réalisation représenté aux figures 1 et 2, la molette 7 est rappelée élastiquement dans une même position sur l'extrémité libre 6a du levier d'actionnement 6, et ce grâce au doigt d'indexage 10 associé au ressort 11.

Selon un exemple de réalisation du dispositif de commande conforme à l'invention, ce dernier comporte des moyens de verrouillage immobilisant en rotation la molette 7 lors du déplacement du levier d'actionnement 6 dans au moins une position active.

Les moyens de verrouillage sont par exemple constitués de rayons (non représentés) s'étendant radialement sous la molette 7, lesquels viennent s'engager sur un plot solidaire de la platine support 3 lorsque l'utilisateur exerce une pression sur ladite molette 7. Cette dernière est alors bloquée en rotation.

Le levier d'actionnement 6 est pourvu entre la molette 7 et l'axe de pivotement P d'un organe d'appui 13 venant actionner le moyen de commutation 4.

Le dispositif de commande conforme à l'invention comporte également un moyen élastique de rappel sollicitant le levier d'actionnement 6 en cas de pivotement dans au moins une position active pour le ramener dans sa position de repos.

Dans l'exemple de réalisation représenté aux figures 2, 3 et 4, l'organe d'appui 13 est un doigt mobile, monté en translation dans un logement complémentaire 14 ménagé dans l'extrémité 6a du levier d'actionnement 6. Le déplacement de l'organe d'appui 13 se fait en sollicitant un ressort complémentaire 15 monté entre ledit organe d'appui 13 et le fond du logement complémentaire 14. L'organe d'appui 13 vient ainsi en contact du moyen de commutation 4 agencé sur la platine support 3. Le ressort complémentaire 15 réalise ainsi le moyen de rappel élastique sollicitant le levier d'actionnement 6 pour le ramener dans sa position de repos.

Ainsi, après avoir sélectionné une fonction à l'aide de la molette 7 par un déplacement en rotation de la molette 7 autour des lames de rotation R, l'utilisateur valide cette fonction en exerçant une pression sur ladite molette 7, entraînant le pivotement de l'organe de commande 5 autour de l'axe de pivotement P, permettant ainsi d'actionner le moyen de commutation 4 par l'intermédiaire de l'organe d'appui 13. Cet actionnement se fait grâce à une compression du ressort complémentaire 15 lequel permettra de ramener le levier d'actionnement 6 dans sa position de repos lorsque l'utilisateur n'exercera plus de pression sur la molette 7.

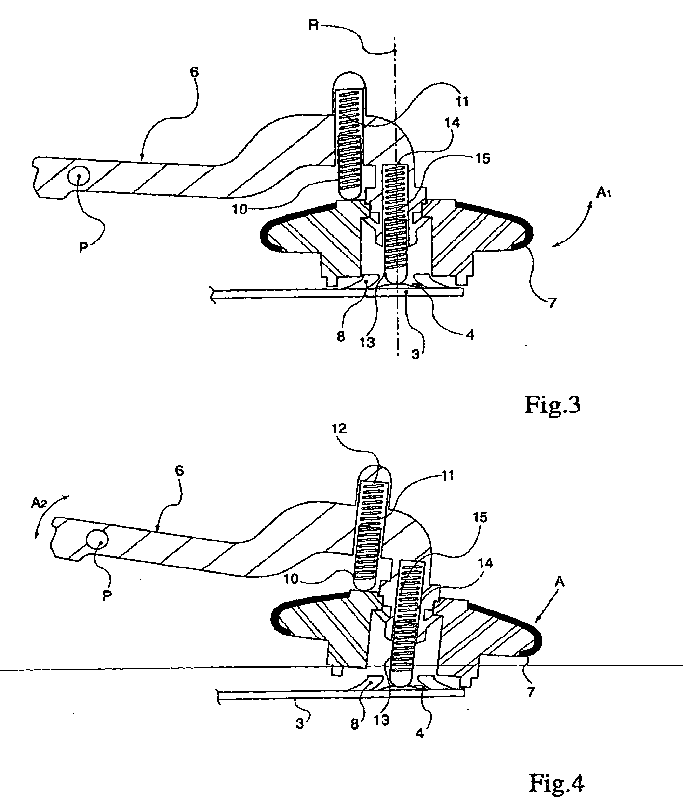

La rotation autour de l'axe R, le pivotement autour de l'axe de pivotement P ainsi que la pression exercée sur la molette 7 sont schématisés aux figures 3 et 4 par l'intermédiaire des références respectives A1, A2 et A.

Selon un exemple de réalisation du dispositif de commande conforme à l'invention, les plans d'extension respectifs dans lesquels s'étendent l'axe de rotation R et l'axe de pivotement P sont parallèles.

Selon un autre exemple de réalisation conforme à l'invention, les plans d'extension respectifs dans lesquels s'étendent l'axe de pivotement P et l'axe de rotation R sont sécants. L'axe de rotation R et l'axe de pivotement P ne sont donc pas coplanaires.

Selon un exemple de réalisation préférentiel du dispositif conforme à l'invention, l'axe de rotation R et l'axe de pivotement P sont orthogonaux.

Le dispositif conforme à l'invention présente une grande compacité. En effet, le dispositif, une fois assemblé, constitue un sous-ensemble monopièce. Ce dernier est clipsé ensuite sur son axe de pivotement P. La mise en place de l'axe de pivotement P, le clipsage et le maintien dans le boîtier 1 peuvent se faire en une seule phrase du process d'assemblage.

Le dispositif conforme à l'invention réduit, de façon remarquable les jeux fonctionnels et ne nécessite pas l'utilisation de graisse pour diminuer les frottements. Le dispositif est donc écologique et économique.

## Revendications

1. Dispositif de commande pour activer/désactiver des fonctions, notamment d'un véhicule automobile, comportant :
- un boîtier (1) dans lequel est rapportée une platine support (3) comportant une surface de contact (2), établissant des contacts électriques,
- un organe de commande (5) sélectionnant et validant une fonction avec l'actionnement d'un moyen de commutation (4),
- l'organe de commande (5) étant monté rotatif sur un axe de rotation et pivotant autour d'un axe de pivotement P, distinct de l'axe de rotation R, la rotation et le pivotement de l'organe de commande (5) permettant respectivement de sélectionner une fonction et de valider la fonction sélectionnée,
**caractérisé en ce que** l'organe de commande (5) est associé à un levier d'actionnement (6) dont l'une des extrémités (6a) comporte l'axe de rotation R et dont l'autre extrémité (6b) est montée pivotante autour de l'axe de pivotement P, le levier (6) étant déplaçable entre une position de repos et au moins une position active dans laquelle au moins un moyen de commutation électrique (4) sur la platine support (3) est actionné à des fins de validation d'une fonction, l'axe de rotation R et l'axe de pivotement P s'étendant dans des plans d'extensions distincts.

2. Dispositif de commande selon la revendication 1, **caractérisé en ce que** l'organe de commande (5) comporte une molette (7) rotative montée sur l'extrémité libre (6a) du levier d'actionnement (6) et associée à une liaison électrique tournante sur la surface de contact (2).

3. Dispositif de commande selon la revendication 2, **caractérisé en ce que** la molette (7) présente une surface d'indexage (9), associée à un doigt d'indexage (10) sollicité par un ressort (11) et monté sur le levier (6) sensiblement parallèlement à l'axe de rotation R, exerçant ainsi un appui élastique sur la surface d'indexage (9).

4. Dispositif de commande selon la revendication 2 ou 3, **caractérisé en ce qu'**il comporte des moyens de verrouillage, immobilisant en rotation la molette (7) lors du déplacement du levier d'actionnement (6) dans au moins une position active.

5. Dispositif de commande selon l'une quelconque des revendications 2 à 4, **caractérisé en ce que** la liaison électrique tournante est obtenue avec des lames conductrices flexibles (8) solidaires de la molette (7) et en contact avec des pistes conductrices réalisant de la surface de contact (2).

6. Dispositif de commande selon l'une quelconque des revendications 2 à 5, **caractérisé en ce que** le levier (6) est pourvu, entre la molette (7) et l'axe de pivotement P d'un organe d'appui (13) venant actionner le moyen de commutation (4).

7. Dispositif de commande selon l'une quelconque des revendications 1 à 6, **caractérisé en ce qu'**il comporte un moyen élastique de rappel (15) sollicitant le levier d'actionnement (6) en cas de pivotement dans au moins une position active pour le ramener dans sa position de repos.

8. Dispositif de commande selon l'une quelconque des revendications 1 à 7, **caractérisé en ce que** les plans d'extension respectifs dans lesquels s'étendent l'axe de pivotement P et l'axe de rotation R, sont parallèles.

9. Dispositif de commande selon l'une quelconque des revendications 1 à 7, **caractérisé en ce que** les plans d'extension respectifs dans lesquels s'étendent l'axe de pivotement P et l'axe de rotation R sont sécants.

10. Dispositif de commande selon l'une quelconque des revendications 1 à 9, **caractérisé en ce que** l'axe de rotation R et l'axe de pivotement P sont orthogonaux.

11. Commande au volant pour véhicule comportant un dispositif de commande conforme à l'une quelconque des revendications 1 à 10.

## Patentansprüche

1. Steuerungsvorrichtung zum Aktivieren/Deaktivieren von Funktionen, insbesondere eines Kraftfahrzeuges, umfassend:
- ein Gehäuse (1), in welches eine Trageplatte (3) eingebracht ist, welche eine Kontaktoberfläche (2) umfasst, welche elektrische Kontakte herstellt,
- ein Steuermittel (5), welches eine Funktion mit der Betätigung eines Schaltmittels (4) auswählt und freigibt,
- wobei das Steuermittel (5) rotierbar auf einer Rotationsachse und schwenkbar um eine Schwenkachse P, die von der Rotationsachse R verschieden ist, montiert ist, wobei es die Rotation und die Schwenkung des Steuermittels (5) jeweils erlaubt, eine Funktion auszuwählen und die ausgewählte Funktion freizugeben,
**dadurch gekennzeichnet, dass** das Steuermittel (5) mit einem Betätigungshebel (6) verbunden ist, von dem eines der Endstücke (6a) die Rotationsachse R umfasst und von dem das andere Endstück (6b) schwenkbar um die Schwenkachse P montiert ist, wobei der Hebel (6) zwischen einer Ruheposition und mindestens einer aktiven Position verschiebbar ist, in welcher mindestens ein elektrisches Schaltmittel (4) auf der Trageplatte (3) zu den Freigabe-Enden einer Funktion angetrieben wird, wobei sich die Rotationsachse R und die Schwenkachse P in verschiedenen Ausbreitungsebenen erstrecken.

2. Steuerungsvorrichtung nach Anspruch 1, **dadurch gekennzeichnet, dass** das Steuermittel (5) ein rotierbares Rädchen (7) umfasst, welches auf dem freien Endstück (6a) des Betätigungshebels (6) montiert ist und in einer drehbaren elektrischen Verbindung auf der Kontaktoberfläche (2) verbunden ist.

3. Steuerungsvorrichtung nach Anspruch 2, **dadurch gekennzeichnet, dass** das Rädchen (7) eine Indexierungs-Oberfläche (9) aufweist, die mit einem Indexierungs-Stift (10) verbunden ist, der durch eine Feder (11) belastet ist und auf dem Hebel (6) deutlich parallel zur Rotationsachse R montiert ist, wobei so eine elastische Auflage auf der Indexierungs-Oberfläche (9) ausgeformt wird.

4. Steuerungsvorrichtung nach Anspruch 2 oder 3, **dadurch gekennzeichnet, dass** sie Sperrmittel umfasst, die in Rotation das Rädchen (7) bei Verschiebung des Betätigungshebels (6) in mindestens einer aktiven Position anhalten.

5. Steuerungsvorrichtung nach irgendeinem der Ansprüche 2 bis 4, **dadurch gekennzeichnet, dass** die drehbare elektrische Verbindung mit leitenden flexiblen zusammenhaltenden Blättern (8) des Rädchens (7) und in Kontakt mit leitenden Spuren, die durch die Kontaktoberfläche (2) gebildet werden, erhalten wird.

6. Steuerungsvorrichtung nach irgendeinem der Ansprüche 2 bis 5, **dadurch gekennzeichnet, dass** der Hebel (6) zwischen dem Rädchen (7) und der Schwenkachse P eines Auflagemittels (13) vorgesehen ist, welches das Schaltmittel (4) antreibt.

7. Steuerungsvorrichtung nach irgendeinem der Ansprüche 1 bis 6, **dadurch gekennzeichnet, dass** es ein elastisches Rückstellungsmittel (15) umfasst, welches den Betätigungshebel (6) im Fall der Schwenkung in mindestens einer aktiven Position belastet, um ihn in seine Ruheposition zurückzuführen.

8. Steuerungsvorrichtung nach irgendeinem der Ansprüche 1 bis 7, **dadurch gekennzeichnet, dass** die jeweiligen Ausbreitungsebenen, in welche sich die Schwenkachse P und die Rotationsachse R erstrecken, parallel sind.

9. Steuerungsvorrichtung nach irgendeinem der Ansprüche 1 bis 7, **dadurch gekennzeichnet, dass** die jeweiligen Ausbreitungsebenen, in welche sich die Schwenkachse P und die Rotationsachse R erstrecken, schneidend sind.

10. Steuerungsvorrichtung nach irgendeinem der Ansprüche 1 bis 9, **dadurch gekennzeichnet, dass** die Rotationsachse R und die Schwenkachse P orthogonal sind.

11. Lenkradsteuerung für ein Fahrzeug, umfassend eine Steuervorrichtung gemäß irgendeinem der Ansprüche 1 bis 10.

## Claims

1. Control device for activating/deactivating functions, in particular of an automotive vehicle, comprising:
- a housing (1) in which a supporting plate (3) incorporating a contact surface (2) for establishing electrical contacts is mounted,
- a control element (5) for selecting and confirming a function in order to actuate a switching means (4),
- the control element (5) being mounted so as to be rotatable about a rotation axis and pivotable about a pivot axis P which is different from the rotation axis R, the rotation and pivoting of the control element (5) respectively enabling a function to be selected and the selected function to be confirmed,
**characterised in that** the control element (5) cooperates with an actuator lever (6), one of the ends (6a) of which constitutes the rotation axis R and the other end (6b) of which is mounted so as to pivot about the pivot axis P, which lever (6) is displaceable between a non-operating position and at least one active position in which at least one electric switching means (4) on the supporting plate (3) is actuated with a view to confirming a function, the rotation axis R and the pivot axis P extending in different planes of extension.

2. Control device as claimed in claim 1, **characterised in that** the control element (5) has a rotating wheel (7) mounted on the free end (6a) of the actuator lever (6) and co-operating with an electric link rotating on the contact surface (2).

3. Control device as claimed in claim 2, **characterised in that** the wheel (7) has an indexing surface (9) co-operating with an indexing finger (10) biased by a spring (11) and mounted on the lever (6) substantially parallel with the rotation axis R, thereby affording an elastic support on the indexing surface (9).

4. Control device as claimed in claim 2 or 3, **characterised in that** it has locking means which prevent the wheel (7) from rotating when the actuator lever (6) is displaced into at least one active position.

5. Control device as claimed in any one of claims 2 to 4, **characterised in that** the rotating electric link is provided in the form of flexible conductive strips (8) joined to the wheel (7) and in contact with conductive tracks constituting the contact surface (2).

6. Control device as claimed in any one of claims 2 to 5, **characterised in that** the lever (6) is provided with a supporting element (13) between the wheel (7) and pivot axis P which moves to actuate the switching means (4).

7. Control device as claimed in any one of claims 1 to 6, **characterised in that** it has an elastic return means (15) which biases the actuator lever (6) when it has been pivoted into at least one active position in order to return it to its non-operating position.

8. Control device as claimed in any one of claims 1 to 7, **characterised in that** the respective planes of extension in which the pivot axis P and the rotation axis R extend are parallel.

9. Control device as claimed in any one of claims 1 to 7, **characterised in that** the respective planes of extension in which the pivot axis P and the rotation axis R extend are secant.

10. Control device as claimed in any one of claims 1 to 9, **characterised in that** the rotation axis R and the pivot axis P are orthogonal.

11. Control system on the steering wheel of a vehicle incorporating a control device as claimed in any one of claims 1 to 10.
